# EUROPÄISCHE PATENTSCHRIFT

(11) **EP 0 433 587 B1**
(45) Veröffentlichungstag und Bekanntmachung des Hinweises auf die Patenterteilung: **14.12.1994**
(21) Anmeldenummer: 90119278.1
(22) Anmeldetag: 08.10.1990
(51) Int. Cl.: B01D 29/35, B01D 29/96, B01D 29/52, B01D 29/90

(54) **Siebwechseleinrichtung mit zylinderförmigem Siebkörper**
Screen changer apparatus with cylindrical screens
Dispositif de remplacement de tamis cylindrique

(30) Priorität: 19.12.1989 DE 3941831
(43) Veröffentlichungstag der Anmeldung: 26.06.1991
(73) Patentinhaber: KREYENBORG VERWALTUNGEN UND BETEILIGUNGEN KG, D-48061 Münster (DE)
(72) Erfinder: Kreyenborg, Udo, W-4400 Münster-Kinderhaus (DE); Hangmann, Manfred, W-4400 Münster (DE); Wilken-Trenkamp, Ludger, W-4400 Münster-Mecklenbeck (DE)
(74) Vertreter: Habbel, Hans-Georg, Dipl.-Ing.

(56) Entgegenhaltungen:
- EP-A- 0 314 024
- DE-B- 1 097 660
- US-A- 3 455 357
- US-A- 4 299 707
- US-A- 4 597 870
- US-A- 4 734 188

## Beschreibung

Die Erfindung bezieht sich auf ein Verfahren zum Betreiben einer Siebwechseleinrichtung gemäß dem Oberbegriff des Patentanspruches 1 und auf eine Siebwechseleinrichtung zum Durchführen dieses Verfahrens gemäß dem Oberbegriff des Anspruches 2.

In der gattungsbildenden US-A-45 97 870 wird eine Filtervorrichtung für Schneckenextruder beschrieben, bei welcher in dem eigentlichen Siebbolzen ein zylinderförmiger Siebkörper angeordnet ist, der von dem zu reinigenden Material von außen angeströmt wird. Das zu reinigende Material muß dann durch das eigentliche Sieb hindurchtreten und fließt im Inneren des zylinderförmigen Siebkörpers zu einem entsprechenden Austrittskanal hin ab.

Bei der bekannten Einrichtung kann sehr schnell ein Zusetzen des Siebes eintreten, da der Druck, der auf die Außenseite des zylinderförmigen Siebes einwirkt, bestrebt ist, die das Sieb bildenden Drähte od. dgl zusammenzudrücken, wodurch die Sieböffnung verringert wird. Durch diese Verringerung der Siebfläche wird der Siebdruck erhöht, so daß die bekannte Einrichtung mit einem überdurchschnittlichen Druckbedarf beim Durchströmen des Siebes arbeitet, der selbst der chemischen Zusammensetzung des Thermoplasten schadet und den Thermoplasten letztendlich zerstört.

Bei der bekannten Einrichtung lagert sich der Schmutz an der Außenseite des Siebes und damit im Bereich der Innenwandung der Bohrung, die den Siebbolzen aufnimmt, ab. Dieser Schmutz muß bei einem Siebwechsel mit dem Siebbolzen herausgezogen werden, was die Arbeit des Siebwechselns natürlich erschwert.

Aus der US-A-34 55 357 und der DE-B-10 97 660 sind Filtervorrichtungen für Strangpressen bekannt, die mit einem von innen nach außen durchströmten Sieb arbeiten, wobei aber diese Siebe in einem Siebträger angeordnet sind, der auf einem Gehäusebauteii zur drehenden Schwenkbewegung um das feste Gehäusebauteil angeordnet ist. Diese langbekannten Vorschläge haben keine Anregung gegeben, die gattungsbildende Einrichtung im Sinne der erfindungsgemäßen Aufgabe zu verbessern.

Aus der DE-B-21 19 545 ist eine Filtereinrichtung bekannt, die mit einer Halteplatte arbeitet, die über den Bereich des Strömungskanales verteilt mehrere längliche austauschbare Siebe aufweist. Auch diese Einrichtung ist gattungsfremd.

Der Erfindung liegt die Aufgabe zugrunde, die gattungsbildende Filtervorrichtung so zu verbessern, daß eine konstante Filterflächengröße erreichbar ist, wobei weiterhin ein leichtes Abführen des abgefilterten Schmutzes möglich sein soll.

Diese der Erfindung zugrundeliegende Aufgabe wird durch die Siebwechseleinrichtung gemäß dem Hauptanspruch gelöst, d.h. dadurch, daß der zylinderförmige Siebkörper in der Betriebsstellung von innen nach außen beströmt wird. Der dann auf die Innenseite des Siebes wirkende Druck führt nicht zu einer Verkleinerung der Sieböffnungen, sondern der von innen her wirkende Druck hält die Sieböffnungen in ihrer Größe offen und die Schmutzpartikelchen lagern sich im Inneren des Siebbolzens ab, kommen also mit der Innenwand der den Siebbolzen aufnehmenden Bohrung beim Siebwechseln nicht in Kontakt. Sie sind vielmehr wie in einer Sammelpatrone im Inneren des Siebbolzens gefangen. Durch den Strömungsbolzen und das Verteilerstück wird eine gute Druckverteilung im Inneren des Siebbolzens erreicht.

Vorteil hafte Ausgestaltungen der erfindungsgemäßen Vorrichtung sind in den Patentansprüchen 2 bis 9 gekennzeichnet.

Ausführungsbeispieie der Erfindung werden nachfolgend anhand der Zeichnungen beschrieben. Die Zeichnungen zeigen dabei in den
- Fig. 1 bis 4: eine erste Ausführungsform eines Siebwechslers in jeweils vier verschiedenen Arbeitsstellungen, in den
- Fig. 5 bis 8: eine abgeänderte Ausführungsform eines Siebwechslers in vier Arbeitsstellungen, in
- Fig. 9: einen Schnitt durch einen Siebwechsler mit zwei übereinander gelagerten Siebbolzen entsprechend der ersten Ausführungsform gemäß Fig. 1 bis 4 und in
- Fig. 10: eine entsprechende Darstellung zweier übereinander angeordneter Siebbolzen, wobei die Siebbolzen entsprechend den Fig. 5 bis 8 ausgebildet sind.

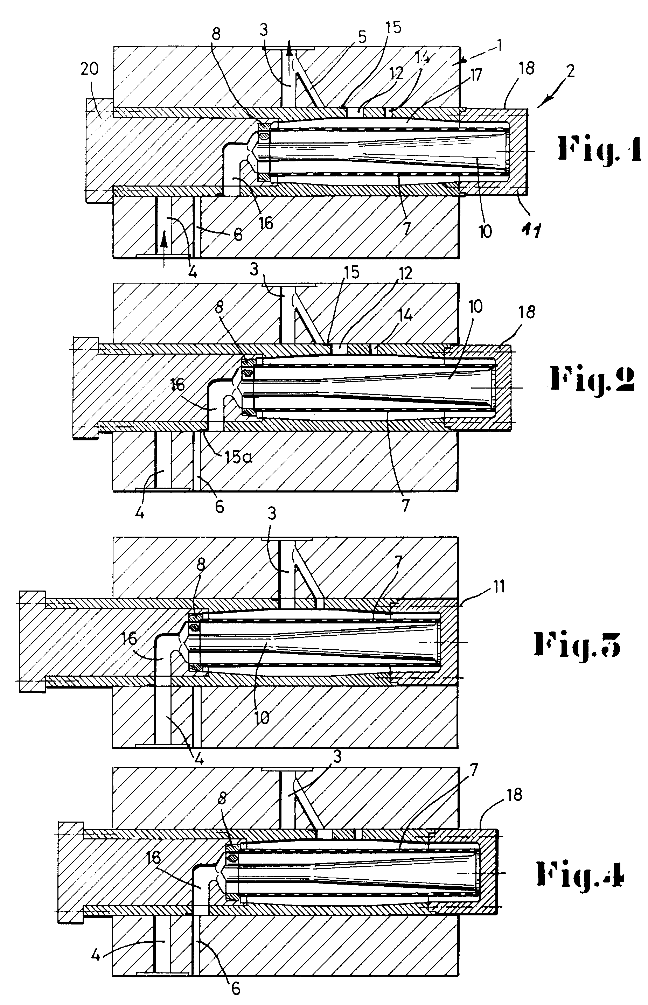

In Fig. 1 ist ein Siebwechsler in der sogenannten "Siebwechslerstellung" dargestellt. Ein Siebwechslergehäuse 1 weist eine Bohrung auf, in der in an sich bekannter Weise ein Siebbolzen 2 saugend dicht angeordnet ist. Das Gehäuse 1 weist einen Eintrittskanal 4 für den zu filternden Thermoplasten und einen Austrittskanal 3 auf, durch den das gefilterte Thermoplastmaterial abgeführt werden kann.

Außerdem weist das Gehäuse 1 einen Rückspülkanal 5 und einen Ausflußkanal 6 auf, wobei der Rückspülkanal 5 einenendes mit dem Austrittskanal 3 in Verbindung steht, während der Ausflußkanal 6 vom Inneren der Bohrung zur Aufnahme des Siebbolzens 2 zur Außenseite des Gehäuses 1 führt.

Der eigentliche Siebbolzen 2 weist einen Hohlraum 17 auf, in dem ein zylinderförmiger Siebkörper 7 zwischen einem Verschlußdeckel 18 und einem Verteilerstück 8 eingespannt ist. Der zylinderförmige Siebkörper 7 kann dabei als Zylinderfilter oder als Kerzenfilter ausgebildet sein.

Im Inneren des zylinderförmigen Siebkörpers 7 ist ein Strömungsbolzen 10 angeordnet, der für eine gleichmäßige Verteilung des zu filternden Gutes über die gesamte Länge des zylinderförmigen Siebkörpers 7 führt.

Der Verschlußdeckel 18 ist z. B. über Zylinderschrauben 11 an dem Grundkörper des Siebbolzens 2 angeschraubt und der Strömungsbolzen 10 wird ebenfalls über eine oder mehrere entsprechende Zylinderschrauben am Verschlußdeckel 18 gehalten.

In der Wandung des Siebbolzens 2 ist eine Austrittsöffnung 12 vorgesehen und eine Rückspülöffnung 14, wobei die Austrittsöffnung 12 mit dem Austrittskanal 3 durch Verschieben des Siebbolzens 2 fluchtend in Verbindung gebracht werden kann, wobei dann auch die Rückspülöffnung 14 mit dem Rückspülkanal 5 fluchtet. Außerdem ist in der Austrittsöffnung 12 eine Belüftungsöffnung 15 vorgesehen.

Innerhalb des Siebbolzens 2 ist eine Eintrittsöffnung 16 vorgesehen, die einenendes zur Wandung des Siebbolzens 2 führt und anderenendes in den Innenraum des zylinderförmigen Siebkörpers 7 mündet. Im Bereich der Mündung dieser Eintrittsöffnung 16 in der Wandung des Siebbolzens 2 ist eine weitere Belüftungsöffnung 15a vorgesehen.

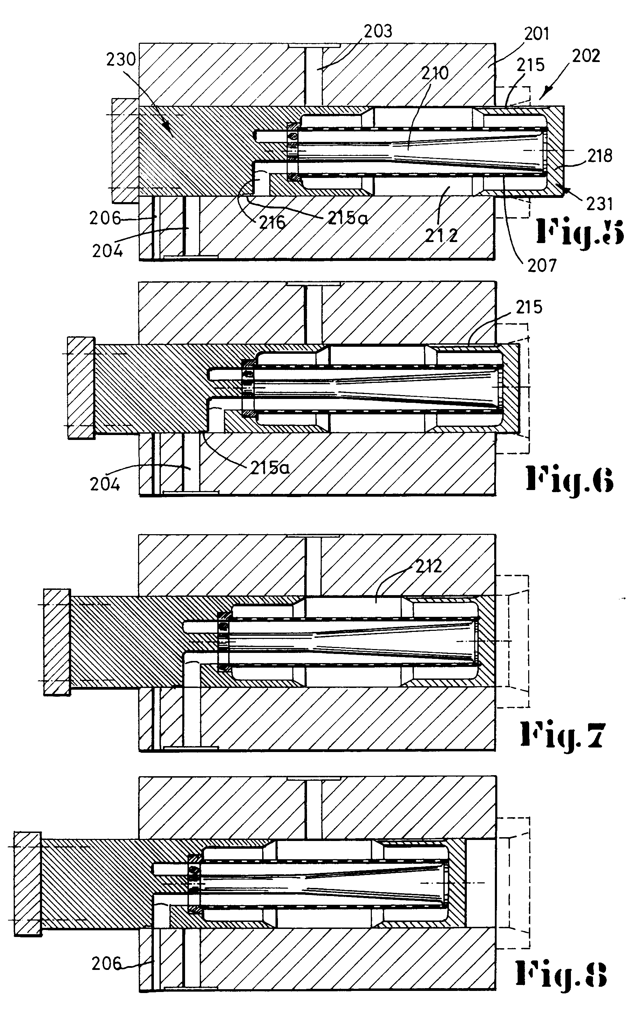

In den Fig. 5 bis 8 ist eine abgeänderte Ausführungsform eines Siebwechslers dargestellt. Auch hier ist ein Gehäuse 201 vorgesehen, in dem ein Siebbolzen 202 angeordnet ist. Das Gehäuse 201 weist einen Austrittskanal 203 und einen Eintrittskanal 204 auf und zusätzlich ist ein Ausflußkanal 206 vorgesehen.

Bei dem in den Fig. 5 bis 8 dargestellten Ausführungsbeispiel ist der Siebbolzen zweiteilig ausgebildet und besteht aus den Bauteilen 230 und 231, wobei das Bauteil 231 gleichzeitig als Verschlußdeckel 218 ausgebildet ist. Die beiden Bauteile 230 und 231 werden über einen Strömungsbolzen 210 fest miteinander verbunden und lassen zwischen sich einen freien Raum 212, der dann als Austrittsöffnung und Rückspülöffnung dienen kann. Eine Belüftungsöffnung 215a ist in dem Bauteil 230 vorgesehen, während eine Belüftungsöffnung 215 in dem Verschlußdeckel 218 angeordnet ist.

Auch bei der Ausführungsform gemäß den Fig. 5 bis 8 kann der zylinderförmige Siebkörper 207 aus einem Zylinderfilter oder einem Kerzenfilter bestehen.

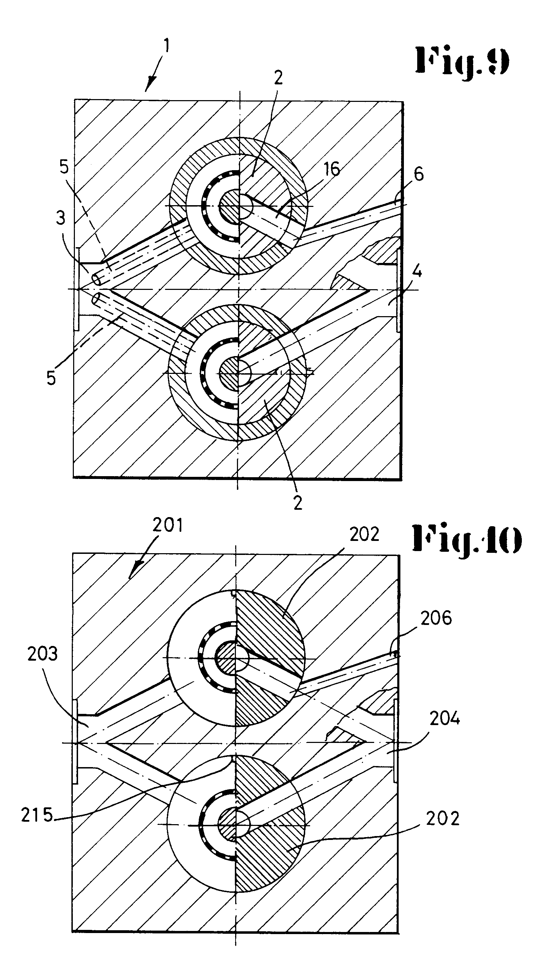

Die Fig. 9 und 10 zeigen, daß in dem Gehäuse 1 bzw. 201 zwei Siebbolzen 2 bzw. 202 übereinander angeordnet sein können und außerdem zeigen diese Figuren dann die Führung der Austrittskanäle 3, 203 der Eintrittskanäle 4, 204, der Ausflußkanäle 6, 206 und in Fig. 10 ist zusätzlich die Belüftungsöffnung 215 erkennbar.

Die Rückspülkanäle 5 sind in Fig. 9 gestrichelt dargestellt.

Die Wirkungsweise der in den Fig. 1 bis 4 dargestellten Einrichtung ist wie folgt:
Fig. 1 zeigt den Siebwechsel, d.h. nachdem der Sieb bolzen 2 vollständig aus dem Gehäuse 1 ausgefahren, derart, daß ein Anschlagkragen 20 ein weiteres Ausfahren verhinderte, war der Verschlußdeckel 18 gelöst und der zylinderförmige Siebkörper 7 dem Siebbolzen 2 entnommen worden. Dann wird ein neuer zylinderförmiger Siebkörper 7 eingesetzt, der Verschlußdeckel 18 wieder geschlossen und dadurch der zylinderförmige Siebkörper 7 zwischen dem Verteilerstück 8 und dem Verschlußdeckel 18 eingespannt.
Fig. 2 zeigt die Entlüftungsstellung. Anschließend an das Auswechseln des Siebkörpers 7 wird der Siebbolzen 2 etwas in dem Gehäuse 1 verschoben, derart, daß die Belüftungsöffnung 15 mit dem Rückspülkanal 5 in Verbindung kommt, wodurch bewirkt wird, daß von dem Materialfluß des in Betriebstellung befindlichen anderen Siebbolzens 2 ein kleiner Strom von Thermoplastmaterial abgezweigt wird, wodurch keine nennenswerten Druck- und Strömungsverluste eintreten. Hierdurch wird der Hohlraum 17 an der Außenseite des zylinderförmigen Siebkörpers 7 langsam mit thermoplastischem Material gefüllt, das dann durch den zylinderförmigen Siebkörper 7 durchtritt und dann letztendlich zur Eintrittsöffnung 16 geführt wird und hier über die Belüftungsöffnung 15a in den Ausflußkanal 6 gelangt. Wenn an der Austrittssseite des Ausflußkanales 6 Thermoplastmaterial ankommt, ist sichergestellt, daß der gesamte Siebraum entlüftet ist.
Fig. 3 zeigt die Betriebsstellung. Hierbei ist der Siebbolzen 2 soweit verschoben, daß die Austrittsöffnung 12 mit dem Ausflußkanal 3 fluchtet, die Rückspülöffnung 14 mit dem Rückspülkanal 5 und die Eintrittsöffnung 16 mit dem Eintrittskanal 4. Der zu filternde Thermoplast wird also durch den Eintrittskanal 4, die Eintrittsöffnung 16 in den Innenraum des zylinderförmigen Siebkörpers 7 geführt, durchströmt die Filtereinrichtung des Siebkörpers 7 und gelangt dann über die Öffnungen 12 und 14 in den Austrittskanal 3 und den Rückspülkanal 5, der dann zur Abführung des gefilterten Thermoplasten dient.

Tritt eine Verschmutzung des Siebkörpers 7 ein, erfolgt ein Rückspülen, d.h. die sich auf der Innenseite des zylinderförmigen Siebkörpers 7 angesammelten Schmutzpartikelchen werden nach außen abgeführt.

Fig. 4 zeigt diese Rückspülstellung. Hierbei ist der Siebbolzen 2 in eine Stellung verschoben, derart, daß der Rückspülkanal 5 mit der Austrittsöffnung 12 des Siebbolzens fluchtet und die Eintrittsöffnung 16 mit dem Ausflußkanal 6. Durch diese Positionierung des Siebbolzens 2 wird erreicht, daß der Siebbolzen 2 von dem Eintrittskanal 4 abgeschlossen ist und damit kein Eintritt von dieser Seite her in das Innere des Siebkörpers 7 mehr möglich ist. Aufgrund des Rückdruckes aus dem anderen Siebbolzen strömt nunmehr Thermoplastmaterial durch den Rückspülkanal 5, den zylinderförmigen Siebkörper 7 und löst das auf der Innenseite des zylinderförmigen Siebkörpers 7 angelagerte Schmutzmaterial ab und führt dies zu dem Ausflußkanal 6.

Die Arbeitsweise der in den Fig. 5 bis 8 dargestellten Einrichtung ist gleich, nur daß hier die bei der vorbeschriebenen Ausführungsform in der Wandung des Siebbolzens 2 vorgesehene Austrittsöffnung 12 und Rückspülöffnung 14 nicht mehr notwendig sind, son dern dadurch geschaffen werden, daß die beiden Bauteile 230 und 231 im Abstand voneinander stehen.

Die Entlüftung dieser Einrichtung erfolgt derart, daß aus dem Eintrittskanal 204 ein kleiner Teil Thermoplast über die Belüftungsöffnung 215a abgezweigt wird und dann über die im Verschlußdeckel 218 angeordnete Belüftungsöffnung 215 abgeführt wird.

## Patentansprüche

1. Siebwechseleinrichtung mit wenigstens einem in einem Gehäuse (1, 2, 201) verschieblich aber dicht gelagerten Siebbolzen (2, 202), der einen zylinderförmigen Siebkörper (7, 207) aufweist, der durch Verschieben des Siebbolzens zwischen einen Eintrittskanal (4, 204) und einen Austrittskanal (3, 203) der Siebwechseleinrichtung verbringbar ist, dadurch gekennzeichnet, daß der Eintrittskanal (4, 204) im Gehäuse (1, 201) über eine im Siebbolzen (2, 202) vorgesehene Eintrittsöffnung (16, 216) in das Innere des zylinderförmigen Siebkörpers (7, 207) mündet und der Austrittskanal (3, 203) im Gehäuse (1, 201) in der Betriebsstellung mit der Außenseite des zylinderförmigen Siebkörpers (7, 207) in Verbindung steht und im Inneren des zylinderförmigen Siebkörpers (7, 207) ein Strömungsbolzen (10, 210) angeordnet ist, der sich im Bereich der Mündung der Eintrittsöffnung (16, 216) an einem Verteilerstück (8) abstützt und an seinem gegenüberliegenden Ende auf der Innenseite eines Verschlußdeckels (18, 218) angeschraubt ist.

2. Siebwechseleinrichtung nach Anspruch 1, gekennzeichnet durch einen Zylinderfilter als zylinderförmigen Siebkörper (7).

3. Siebwechseleinrichtung nach Anspruch 1, gekennzeichnet durch einen Kerzenfilter als zylinderförmigen Siebkörper (7).

4. Siebwechseleinrichtung nach einem der vorhergehenden Ansprüche, dadurch gekennzeichnet, daß der Siebbolzen (2) einen langgestreckten Hohlraum (17) besitzt, in den einenendes stirnseitig die Eintrittsöffnung (16) mündet und der anderenendes einen abnehmbaren Verschlußdeckel (18) aufweist, wobei zwischen der Eintrittsöffnung (16) und dem Verschlußdeckel (18) der zylinderförmige Siebkörper (7) derart eingespannt ist, daß die Eintrittsöffnung (16) in den Siebkörperinnenraum mündet, wobei in der den Hohlraum (17) umgebenden Wandung des Siebbolzens (2) eine Austrittsöffnung (12) vorgesehen ist, die in der Betriebsstellung mit dem Austrittskanal (3) fluchtet, während die Eintrittsöffnung (16) in der Betriebsstellung mit dem Eintrittskanal (4) fluchtet.

5. Siebwechseleinrichtung nach einem der vorhergehenden Ansprüche, dadurch gekennzeichnet, daß der Siebbolzen (202) zweiteilig ausgebildet ist und in seinem einen Bauteil (230) eine Eintrittsöffnung (216) aufweist, die mit dem Eintrittskanal (204) in Verbindung bringbar ist und anderenendes in das Innere des zylinderförmigen Siebkörpers (207) mündet, während das andere Teil des Siebbolzens (202) als Verschlußdeckel (218) ausgebildet ist und die beiden Bauteile (230, 218) über einen Strömungsbolzen (210) fest miteinander verbunden sind, der im Inneren des zylinderförmigen Siebkörpers (207) angeordnet ist, wobei die eigentliche Austrittsöffnung des Siebbolzens durch einen freien Raum (212) gebildet wird.

6. Siebwechseleinrichtung nach einem der vorhergehenden Ansprüche, dadurch gekennzeichnet, daß in dem Siebwechslergehäuse ein Ausflußkanal (6, 206) vorgesehen ist, der in der sogenannten Rückspülstellung mit der Eintrittsöffnung (16, 216) in Verbindung bringbar ist und zur Abführung der rückgespülten Schmutzpartikel dient.

7. Siebwechseleinrichtung nach einem der vorhergehenden Ansprüche 1 bis 8, dadurch gekennzeichnet, daß mit dem Austrittskanal (3) ein Rückspülkanal (5) verbunden ist, der einenendes in den Austrittskanal (3) mündet und anderenendes mit einer in der Wandung des Siebbolzens (2) vorgesehenen Rückspülöffnung (14) in Verbindung bringbar ist.

8. Siebwechseleinrichtung nach einem der vorhergehenden Ansprüche, dadurch gekennzeichnet, daß bei Einsatz eines zweiteiligen Siebbolzens (202) eine der Entlüftungsöffnungen (215) in dem Verschlußdeckel (218) vorgesehen ist.

9. Siebwechseleinrichtung nach einem der vorhergehenden Ansprüche, dadurch gekennzeichnet, daß zwei Siebbolzen (2, 202) übereinander in einem Gehäuse (1, 201) angeordnet sind.

## Claims

1. A sieve changing device comprising at least one sieve pin (2, 202) mounted displaceably but tightly in a housing (1, 2, 201) and comprising a cylindrical sieve member (7, 207) which may be brought between an inlet channel (4, 204) and an outlet channel (3, 203) of the sieve changing device by displacement of the sieve pin, characterized in that the inlet channel (4, 204) in the housing (1, 201) opens via an inlet opening (16, 216) provided in the sieve pin (2, 202) into the inside of the cylindrical sieve member (7, 207) and the outlet channel (3, 203) in the housing (1, 201) is connected with the outside of the cylindrical sieve member (7, 207) when in the operating position and in that a flow pin (10, 210) is arranged inside the cylindrical sieve member (7, 207), which flow pin (10, 210) is supported on a distributor member (8) in the area of the mouth of the inlet opening (16, 216) and is screwed at its opposite end to the inside of a sealing cover (18, 218).

2. A sieve changing device according to claim 1, characterized by a cylinder filter acting as the cylindrical sieve member (7).

3. A sieve changing device according to claim 1, characterized by a candle filter acting as the cylindrical sieve member (7).

4. A sieve changing device according to any one of the preceding claims, characterized in that the sieve pin (2) includes an elongate cavity (17), into the front end of which there opens the inlet opening (16) and which comprises at the other end a removable sealing cover (18), the cylindrical sieve member (7) being mounted between the inlet opening (16) and the sealing cover (18) in such a way that the inlet opening (16) opens into the inside of the sieve member, an outlet opening (12) being provided in the wall of the sieve pin (2) surrounding the cavity (17), which outlet opening (12) is flush with the outlet channel (3) in the operating position, while the inlet opening (16) is flush with the inlet channel (4) in the operating position.

5. A sieve changing device according to any one of the preceding claims, characterized in that the sieve pin (202) is of two-part construction and comprises an inlet opening (216) in its one component (230), which inlet opening (216) may be brought into connection with the inlet channel (204) and opens at the other end into the inside of the cylindrical sieve member (207), while the other part of the sieve pin (202) is constructed as a sealing cover (218) and the two components (230, 218) are connected firmly together by a flow pin (210), which is arranged inside the cylindrical sieve member (207), the outlet opening proper of the sieve pin being formed by a free space (212).

6. A sieve changing device according to any one of the preceding claims, characterized in that a discharge channel (6, 206) is provided in the sieve changer housing, which discharge channel (6, 206) may be brought into connection with the inlet opening (16, 216) in the backwash position and serves to carry away the backwashed dirt particles.

7. A sieve changing device according to any one of preceding claims 1 to 6, characterized in that a backwash channel (5) is connected with the outlet channel (3) and opens at one end into the outlet channel (3) and at the other end may be brought into connection with a backwash opening (14) in the wall of the sieve pin (2).

8. A sieve changing device according to any one of the preceding claims, characterized in that, when a two-part sieve pin (202) is used, one of the ventilation openings (215) is provided in the sealing cover (218).

9. A sieve changing device according to any one of the preceding claims, characterized in that two sieve pins (2, 202) are arranged above one another in a housing (1, 201).

## Revendications

1. Dispositif pour le changement de cribles avec au moins un boulon porte-crible (2, 202) supporté de manière coulissante mais étanche dans un boîtier (1, 2, 201), qui présente un corps de crible cylindrique (7, 207) qui peut être déplacé par le coulissement du boulon porte-crible entre un canal d'entrée (4, 204) et un canal de sortie (3, 203), caractérisé en ce que le canal d'entrée (4, 204) débouche dans le boîtier (1, 201) par l'intermédiaire d'une ouverture d'entrée (16, 216) prévue dans le boulon porte-crible (2, 202) à l'intérieur du corps de crible cylindrique (7, 207) et le canal de sortie (3, 203) communique dans le boîtier (1, 201) dans la position de fonctionnement avec le côté extérieur du corps de crible cylindrique (7, 207) et un boulon d'écoulement (10, 210) est disposé à l'intérieur du corps de crible cylindrique (7, 207), et est appuyé dans la zone de l'embouchure de l'ouverture d'entrée (16, 216) sur une pièce de répartition (8) et vissé à son extrémité opposée sur le côté intérieur d'un couvercle de fermeture (18, 218).

2. Dispositif pour le changement de cribles selon la revendication 1, caractérisé en ce qu'il comporte un crible cylindrique comme corps de crible cylindrique (7).

3. Dispositif pour le changement de cribles selon la revendication 1, caractérisé en ce qu'il comporte un crible en forme de bougie comme corps de crible cylindrique (7).

4. Dispositif pour le changement de cribles selon l'une ou l'ensemble des revendications précédentes, caractérisé en ce que le boulon porte-crible (2) possède un espace creux (17) allongé, dans lequel l'ouverture d'entrée (16) débouche sur la face à une extrémité et qui présente à l'autre extrémité un couvercle de fermeture (18) amovible, le corps de crible cylindrique (7) étant fixé entre l'ouverture d'entrée (16) et le couvercle de fermeture (18) de telle sorte que l'ouverture d'entrée (16) débouche dans l'espace intérieur du corps de crible, une ouverture de sortie (12) étant prévue dans la paroi du boulon portecrible (2) entourant l'espace creux (17), laquelle est alignée avec le canal de sortie (3) dans la position de travail, alors que l'ouverture d'entrée (16) est alignée avec le canal d'entrée (4) dans la position de travail.

5. Dispositif pour le changement de cribles selon l'une ou l'ensemble des revendications précédentes, caractérisé en ce que le boulon porte-crible (202) est conçu en deux parties et présente dans l'un de ses éléments (230) une ouverture d'entrée (216) qui peut être mise en communication avec le canal d'entrée (204) et débouche à l'autre extrémité à l'intérieur du corps de crible cylindrique (207), alors que l'autre partie du boulon porte-crible (202) est conçue comme un couvercle de fermeture (218) et les deux éléments (230, 218) sont reliés entre eux de manière fixe par un boulon de circulation (210), qui est disposé à l'intérieur du corps de crible cylindrique (207), l'ouverture de sortie proprement dite du boulon porte-crible étant formée par un espace dégagé (212).

6. Dispositif pour le changement de cribles selon l'une ou l'ensemble des revendications précédentes, caractérisé en ce qu'il est prévu dans le boîtier du changeur de cribles un canal d'écoulement (6, 206) qui peut être mis en communication avec l'ouverture d'entrée (16, 216) dans la position dite de rinçage à contre-courant et qui sert à l'évacuation des particules d'impuretés entraînées à contre-courant.

7. Dispositif pour le changement de cribles selon l'une ou l'ensemble des revendications précédentes, caractérisé en ce qu'un canal de rinçage à contre-courant (5) communique avec le canal de sortie (3) et débouche à une extrémité dans celui-ci et peut être mis en communication à l'autre extrémité avec une ouverture de rinçage à contre-courant (14) prévue dans la paroi du boulon porte-crible (2).

8. Dispositif pour le changement de cribles selon l'une ou l'ensemble des revendications précédentes, caractérisé en ce que lors de l'utilisation d'un second boulon porte-crible (202), l'une des ouvertures d'évacuation de l'air (215) est prévue dans le couvercle de fermeture (218).

9. Dispositif pour le changement de cribles selon l'une ou l'ensemble des revendications précédentes, caractérisé en ce que deux boulons porte-crible (2, 202) sont disposés l'un au-dessus de l'autre dans un boîtier (1, 201).
